# EUROPÄISCHE PATENTANMELDUNG

(11) **EP 1 486 842 A2**
(43) Veröffentlichungstag der Anmeldung: **15.12.2004**
(21) Anmeldenummer: 04013508.9
(22) Anmeldetag: 08.06.2004
(51) Int. Cl.: G05B 19/418

(54) **Verfahren zum Übertragen von Messdaten von einem Messgerät zu einer zentralen Steuereinheit**

(30) Priorität: 10.06.2003 DE 10326493
(71) Anmelder: Endress + Hauser Flowtec AG, 4153 Reinach BL 1 (CH)
(72) Erfinder: Roth, Jörg, 79540 Lörrach (DE)
(74) Vertreter: Andres, Angelika

(57) **Zusammenfassung**

Ein Verfahren zum Übertragen von Messdaten von einem Feldgerät der Prozessautomatisierungstechnik zu einer übergeordneten Einheit (z. B. Leitsystem bzw. Steuereinheit) über einen Datenbus werden die Messdaten in einem Dateitransferprotokoll (z. B. FTP-Protokoll) übertragen.

## Beschreibung

Die Erfindung betrifft eine Verfahren zum Übertragen von Messdaten von einem Messgerät der Prozessautomatisierungstechnik zu einer zentralen Steuereinheit gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte, pH-Redox-Messgeräte, Leitfähigkeitsmessgeräte etc., die als Messgeräte die entsprechenden Prozessvariablen Füllstand, Durchfluss, Druck, Temperatur, pH-Wert bzw. Leitfähigkeit erfassen. Eine Vielzahl derartiger Felgeräte wird von der Firma Endress + Hauser hergestellt und vertrieben. Häufig sind Feldgeräte über einen Feldbus mit übergeordneten Einheiten z. B. Prozessleitsysteme bzw. Steuereinheiten verbunden. Diese übergeordneten Einheiten dienen zur Prozessvisualisierung, Prozessüberwachung, Prozesssteuerung sowie zur Bedienung der an den Feldbus angeschlossenen Feldgeräte.

Beispiele für derartige Feldbussysteme sind CAN, CAN-OPEN, HART, Profibus PA, Profibus DP, Profibus FMS, Foundation Fieldbus, etc..

Mit Hilfe dieser Feldbussysteme ist es nicht nur möglich Messwerte von einem Sensor zu einer zentralen Steuereinheit zu übertragen, sondem auch Feldgeräte vom Prozessleitsystem aus "remote" zu bedienen. Insbesondere die Bedienbarkeit der Feldgeräte macht die Feldbussysteme sehr aufwendig. Hierfür sind spezielle Hardware- und Softwarekomponenten sowohl im Feldgerät wie auch im Leitsystem notwendig.

Werden nur Feldgeräte eines einzigen Feldgerätherstellers eingesetzt, so können proprietäre Bedienprogramme eingesetzt werden.
Häufig ist dies jedoch nicht der Fall, so dass spezielle Gerätebeschreibungen notwendig sind, die den Bedienprogrammen die Funktionalität der eingesetzten Feldgeräte mitteilen. Beispiele für Gerätebeschreibungen sind HART@, Profibus® oder Foundation® Fieldbus Device Descriptions.
Werden diese Feldbussysteme durch neue Systeme ersetzt, so müssen die Gerätebeschreibungen aufwendig geändert werden.
Seit neuerem werden auch Bedienprogramme eingesetzt, die den FDT-Spezifikationen entsprechen (PactWare®, FieldCare® Fa. Endress+Hauser). Die als Industriestandard geltenden FDT-Spezifikationen wurden von der PNO Profibus® Nutzerorganisatione in Zusammenarbeit mit dem ZVEI (Zentralverband der Elektrotechnik- und Elektronikindustrie) entwickelt. Die aktuelle FDT-Spezifikation 1.2 ist über den ZVEI erhältlich.
Die Feldgeräte werden mit Hilfe von Gerätetreibern DTMs (device type manager) in die Bedienprogramme eingebunden.
Um zu allen Feldgräte einschließlich aller möglichen Varianten DTMs zu erstellen, ist seitens der Feldgerätehersteller ein erheblicher Aufwand verbunden.

Vielfach werden die Bedienmöglichkeiten, die ein Feldgerät besitzt nur vor Ort bei der Installation wahrgenommen.

Um einfach nur die von den Feldgeräten gelieferten Messdaten im Leitsystem ansehen bzw. abspeichern zu können, sind aufwendige spezielle Bedienprogramme (CommuWin®, FieldCare® Fa. Endress+Hauser) notwendig.

Allgemein lässt sich sagen, dass für die Übertragung von Messwerten bei Feldgeräten der Prozessautomatisierungstechnik aufwendige und teure Komponenten notwendig sind.

Aufgabe der Erfindung ist es deshalb ein einfaches und kostengünstiges Verfahren zum Übertragen von Messdaten von einem Messgeräte der Prozessautomatisierungstechnik zu einer zentralen Steuereinheit anzugeben, dass die oben genannten Nachteile nicht aufweist, das insbesondere einfach und kostengünstig durchführbar ist.

Gelöst wird diese Aufgabe durch die im Anspruch 1 angegebenen Merkmale. Vorteilhafte Weiterentwicklungen der Erfindung sind in den Unteransprüchen angegeben.

Die wesentliche Idee der Erfindung besteht darin, die Messdaten in einem Dateitransfer-Protokoll vom zu übertragen. In einfacher Weise handelt es sich bei dem Datenübertragungsprotokoll um das FTP-Protokoll, das auf dem TCP-Transportprotokoll basiert. Das TCP-Protokoll wird in Verbindung mit dem IP-Internetprotokoll bei Datenübertragungen im Internet weltweit eingesetzt.

Zu diesem Zwecke ist im Feldgerät ein FDP-Server vorgesehen.

Als Standard für LANs (Local Area Networks) dient heute der Ethernet-Standard. In vorteilhafter Weise basiert deshalb das Netzwerk auf dem Ethernet-Standard.

Um die Kommunikationsverbindung nicht unnötig zu belasten, werden mehrere Messwerte im Feldgerät mit einer zugehörigen Zeitangabe abgespeichert und zusammen als Paket zur Steuereinheit übertagen.

Eine derartige Datenübertragung eignet sich vor allem für Messgeräte im Bereich Massedurchfluss und Füllstand.

Nachfolgend ist die Erfindung anhand eines in der Zeichnung dargestellten Ausführungsbeispiels näher erläutert.

### Es zeigen:

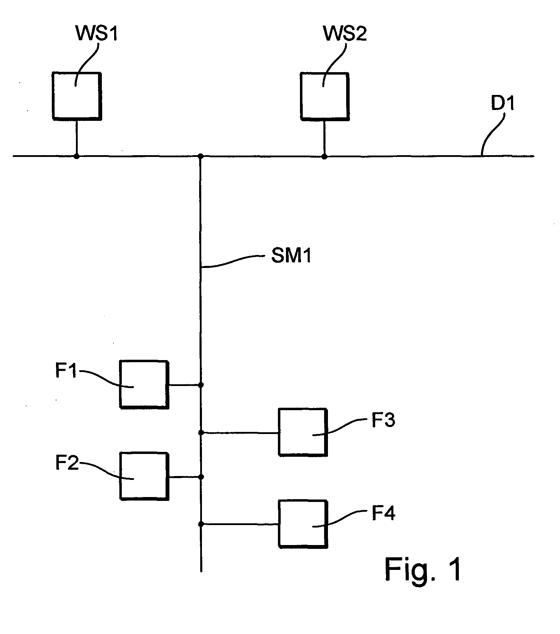

Fig. 1 Netzwerk der Prozessautomatisierungstechnik.

In Fig. 1 ist ein Netzwerk der Prozessautomatisierungstechnik näher dargestellt. An einen Datenbus D1 sind mehrere Rechnereinheiten (Workstations W1, W2) angeschlossen. Diese Rechnereinheiten dienen als übergeordnete Einheiten (Leitsystem bzw. Steuereinheit) zur Prozessvisualisierung und Prozessüberwachung. Der Datenbus D1 ist mit einem Bussegment SM1 verbunden. Das Bussegment SM1 beseht aus mehreren Feldgeräten. Bei den Feldgeräten F1, F2, F3, F4 kann es sich um Messgeräte oder Aktoren handeln. Das Netzwerk der Prozessautomatisierungstechnik arbeitet nach dem Ethernet-Standard.

Nachfolgend ist das erfindungsgemäße Verfahren näher erläutert. Das Feldgerät F1 erzeugt ein Messwert M1, der in ein FTP-Protokoll verpackt wird und zum Leitsystem z. B. WS1, WS2 übertragen wird. Da es sich bei dieser Kommunikation um eine Client-Server-Verbindung handelt, ist im Feldgerät F1 ein FTP-Server vorgesehen. Auf dem Leitsystem ist entsprechend ein FTP-Client installiert. Mit diesem Verfahren ist eine einfache und kostengünstige Übertragung von Messwerten zwischen einem Feldgerät und ein Leitsystem möglich.

Die Messwerte können im Leitsystem in einfacher Weise weiterverarbeitet werden.

Es sind keine speziellen Bedienprogramme notwendig, um Messwerte im Leitsystem darstellen zu können.

Auch die Hardware Schnittstellen am Feldgerät zum Netzwerk sind sehr kostengünstig, da derartige Netzwerke einen sehr großen Verbreitungsgrad besitzen.

Um das Netzwerk nicht unnötig zu belasten, werden mehrere Messwerte im Feldgerät F1 mit einer Zeitangabe abgespeichert, bevor sie zusammen als Paket an das Leitsystem übertragen werden. Bei den Feldgeräten kann es sich z. B. um einen Massedurchflussgerät bzw. einem Füllstandsmessgerät handeln.

## Patentansprüche

1. Verfahren zur Übertragung von Messdaten von einem Feldgerät der Prozessautomatisierungstechnik zu einer übergeordneten Einheit (z. B. Leitsystem bzw. Steuereinheit) über einen Datenbus, **dadurch gekennzeichnet, dass** die Messdaten in einem Dateitransfer-Protokoll übertragen werden.

2. Verfahren nach Anspruch 1, **dadurch gekennzeichnet, dass** das Dateitransfer-Protokoll das FTP-Protokoll ist.

3. Verfahren nach einem der vorhergehenden Ansprüche, **dadurch gekennzeichnet, dass** im Messgerät ein FTP-Server vorgesehen ist.

4. Verfahren nach einem der vorhergehenden Ansprüche, **dadurch gekennzeichnet, dass** das Netzwerk auf dem Ethernet-Standard basiert.

5. Verfahren nach einem der vorhergehenden Ansprüche, **dadurch gekennzeichnet, dass** im Messgerät mehrere Messwerte mit zugehöriger Zeitangabe abgespeichert werden und zusammen als Paket übertragen werden.

6. Verfahren nach einem der vorhergehenden Ansprüche, **dadurch gekennzeichnet, dass** das Messgerät einen Massedurchflussmessgerät oder ein Füllstandsmessgerät ist.
